# EUROPEAN PATENT APPLICATION

(11) **EP 2 410 483 A1**
(43) Date of publication of application: **25.01.2012**
(21) Application number: 11174232.6
(22) Date of filing: 15.07.2011
(51) Int. Cl.: G06Q 40/00, G06Q 30/00

(54) **Use of an online social network system to share risk among trusted persons**

(30) Priority: 19.07.2010 US 839399
(71) Applicant: Mysafetynet Limited, Birmingham B18 6EW (GB)
(72) Inventor: Albert, Ingmar, 10115 Berlin (DE); Bonello, Burckhardt, 14055 Berlin (DE); Herfurth, Sebastian, 10557 Berlin (DE); Kunde, Tim, 10115 Berlin (DE); Westphal, Dr. Rouven, 14469 Potsdam (DE)
(74) Representative: Brunner, John Michael Owen

(57) **Abstract**

A method includes using at least one online social network system to identify trusted persons who might be willing to join a risk-sharing agreement to cover an activity or asset; using a computer system to form the risk-sharing agreement among at least some of those trusted persons; and using the risk- sharing agreement to reduce the cost of conventional insurance.

## Description

### BACKGROUND

The insurance industry is faced with high costs due to complex infrastructure requirements, and high distribution costs, moral hazard (e.g., insurance fraud), cross-subsidization (i.e., customers with a good risk profile subsidizing customers with bad risk profiles), adverse selection (contracting of unknown high risk profiles) and high processing costs. These costs are passed on to customers and, consequently, increase the price of insurance.

It would be desirable to reduce the complexity of the infrastructure requirements, particularly the information technology requirements, thereby reducing the aforementioned costs.

### SUMMARY OF THE INVENTION

The present invention is defined in the appendant claims,

### BRIEF DESCRIPTION OF THE DRAWINGS

Figure 1 is an illustration of a method of using a social network system to form a risk-sharing agreement among trusted persons.

Figure 2 is an illustration of a method of using a social network system to reduce the cost of insurance.

Figure 3 is an illustration of a method of administering risk- sharing agreements.

Figure 4 is an illustration of a system for forming and administering a risk-sharing agreement.

Figure 5 is an illustration of a method for rating trusted persons.

Figure 6 is an illustration of a system for forming and administering risk-sharing agreements.

### DETAILED DESCRIPTION OF THE INVENTION

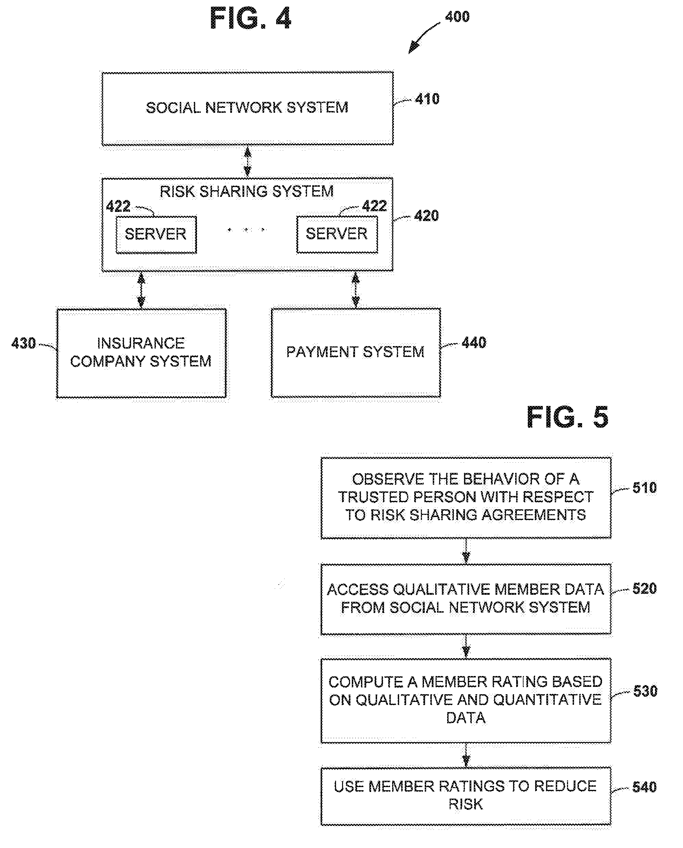

Figure 4 is an illustration of a system 400 for forming and administering risk-sharing agreements. The system 400 includes at least one online social network system 410 and an online risk-sharing system 420. The online systems 410 and 420 are computer-based and communicate via the Internet or other networks. Examples of online social network systems 410 include, but are not limited to Facebook, Linkedln®, StudiVZ, MeinVZ, and Xing.

The risk-sharing system 420 may include one or more servers 422 that interact with the social network system 410 through an application programming interface (API). For example, an API enables the risk-sharing system 420 to integrate with Facebook's social graph to drive registration, authentication, personalization, and traffic.

The system 400 of Figure 4 further includes an insurance company system 430 and a payment system 440. The insurance company system 430 includes computers maintained by one or more insurance companies. The insurance company computers provide data for financial analysis, such as customer relationship management data, credit information, and insurance contract information. The risk-sharing system 420 can deal directly with the insurance companies, or it can deal with the insurance companies through insurance brokers.

The payment system 440 includes computer systems maintained by one or more e-commerce companies (e.g., banks, Paypal^{TM}) or payment providers that allow payments and money transfers to be made. Internet common standards are provided by insurance companies and payment providers to exchange data with third parties such as the risk-sharing system 420.

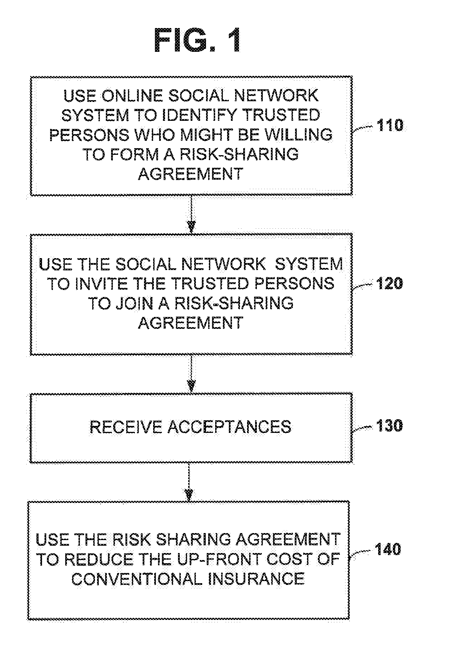

Additional reference is now made to Figure 1, which illustrates a method of using one or more social network systems 410 and a risk-sharing system 420 to form a risk-sharing agreement among a group of trusted persons. In principle, the method allows an individual to allocate a small portion of risk among a group of trusted persons. If a claim is made, the payout by each member of the group would be relatively small.

At block 110, at least one social network system is used to identify trusted persons who might be willing to join a risk-sharing agreement to cover an activity or an asset. For example, trusted persons are identified to provide financial support to cover a risky activity or asset. Trusted persons may be identified according to qualitative criteria (e.g. trust). Trusted persons may also be identified according to quantitative criteria (e.g. risk history, observed behavior), once the quantitative data becomes available.

At block 120, the social network system 410 is used to invite the identified trusted persons to join (e.g., register with, log onto) the risk-sharing system 420. An invitation to a trusted person may specify proposed terms of a risk-sharing agreement, including the covered activity or asset, insurance type and the maximum amount of money the individual is willing to contribute to a claim against the activity and/or asset. Invitations can be made by means other than the social network system 410 (e.g., e-mail, digital address book etc.).

At block 130, acceptances are received from those trusted persons willing to enter into the risk-sharing agreement. Acceptances may be received via the social network system 410 or other means (e.g., e-mail, digital address book). A trusted person who is part of a risk-sharing agreement will be referred to as a "member" of the agreement, and the members of an agreement are referred to collectively as a "group."

At block 140, the risk-sharing agreement is used to reduce the up-front cost of conventional insurance. Consider the following two instances of using the risk-sharing agreement to reduce the cost of insurance. In the first instance, the risk-sharing agreement is used to cover an activity or asset instead of conventional insurance. That is, conventional insurance is not purchased. If a claim by an injured party (the "claimant") is submitted, each member makes an agreed-upon contribution to cover the claim. That is, each member provides support. Up-front cost is saved because an insurance policy is not purchased.

In a variation of this first instance, conventional insurance is purchased from an insurance company after the risk-sharing agreement has been formed. This conventional insurance may supplement the risk-sharing agreement for amounts beyond those covered by the risk-sharing agreement. Thus, if the contributions by the group do not fully cover a claim, the supplemental insurance will cover the difference. Individual policies or group policies may be purchased.

In the second instance, conventional insurance is purchased (individually or as a group) to cover the activity or asset, and the risk-sharing agreement is used to increase a deductible of the conventional insurance. Up-front cost is saved because the cost of the policy is reduced by a higher deductible. In addition, downstream costs (reduction of fraud, efficient distribution, good risk selection, reduction of processing costs and intelligent incentives to avoid risk) will likely be reduced.

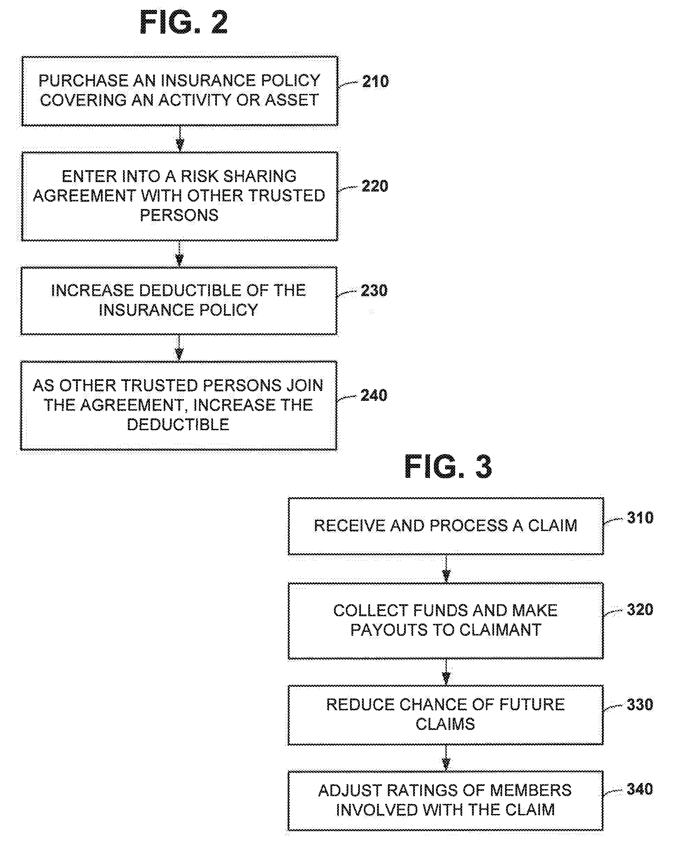

This second instance is illustrated in Figure 2. At block 210, a person purchases an insurance policy covering an activity or asset (that person is referred to as the "insurance policy holder)." For example, the activity is driving a car, and the insurance policy is an auto insurance policy.

At block 220, the insurance policy holder enters into an agreement that shares risk among members. The social network system 410 and risk-sharing system 420 are used to identify and invite trusted persons to enter into and form the risk-sharing agreement.

At block 230, the deductible of the group insurance policy is increased. If individual policies were purchased, the deductibles of the individual policies are increased.

At block 240, later, as other trusted persons join the risk- sharing agreement, the deductible(s) are further increased. For example, another trusted person joins the risk-sharing agreement and agrees to pay $25.00 to cover a claim. The insurance policy holder then increases the deductible by $25.00. The deductible can be increased for each additional trusted person that joins the risk- sharing agreement.

Consider a simple example with made-up numbers. A customer purchases an insurance policy for $265 per year. The customer then enters into a risk-sharing agreement with one trusted person. Each member agrees to provide support in the amount of $50 in the event a claim is filed. This being the case, the customer increases the deductible of the insurance policy by $50, resulting in a $16 dollar reduction in the insurance premium. Thus, $16 is saved up front. Later, four other trusted persons join the risk-sharing agreement, each agreeing to provide support of $50. Each added member allows the deductible to be further increased, resulting in additional up-front savings. Adding the four other members to the agreement reduces the insurance premium to $185 per year.

Thus, up-front costs are lowered. Up-front cost can also be lowered by group buying power. Group buying consists of people with similar risk profiles that join forces to secure discounts that were otherwise not possible on their own. Consequently this leads to lower up-front costs for insurance over time. The online social network system 410 can be used to identify people with similar risk profiles.

Up-front costs are also lowered by improving the risk pool over time. People who trust each other naturally attract better risks due to the mitigation of adverse selection and moral hazard. The online social network system 410 is relied upon to identify such people. An individual can select trusted persons who pose a lower risk for the type of activity or asset being covered. An individual can select trusted persons who are less likely to submit fraudulent claims. An individual can optimize the number of trusted persons and the amount of risk spread on one or more other individuals in order to gain a cost efficient way to obtain insurance or to otherwise hedge risks.

The online social network system is leveraged in other ways. Social networks provide positive network externalities. When a positive network externality is present, the value of a product or service increases as more people use it. This principle applies to the method herein. The ease of communicating and connecting with others as part of a social network provides viral marketing effects. Viral marketing represents a very cost-effective way to distribute the value-add information of the risk-sharing system 420 to a wide variety of potential customers.

Risk-sharing agreements may be dynamic. For each agreement, additional trusted persons may join, and members may leave. Moreover, a person may enter into more than one agreement.

Risk-sharing agreements do not have to be legally binding. A trusted person has a built-in incentive to honor their promise to other trusted persons. A trusted person also has an incentive to maintain a good reputation.

Risk-sharing agreements may be star-based, where each member knows each of the other members and has individual agreements with each of those other members. Risk-sharing agreements may instead be cloud- based, where a member does not know all of the other members in a risk-sharing agreement, but relies on the risk-sharing system 420 to verify their trustworthiness.

Reference is now made to Figure 3, which illustrates a method of administering a risk-sharing arrangement. At block 310, a claim is received and processed. Processing a claim may include using the social network system 410 to verify the claim. For instance, trusted persons can use the social network system 410 to talk and share information about the claim.

The risk-sharing system 420 allows each member of the agreement to accept or dispute a claim.

At block 320, contributions are collected from members of the agreement, and payouts are made on behalf of the claimant.

At block 330, the social network system 410 can be used to find services to help the claimant. For instance, the social network can be used to find a doctor or mechanic. Additionally, the social network system 410 can provide access to preventive measures (e.g., guidance on proper nutrition, guidance on how to protect property) to reduce the likelihood of future claims occurring.

At block 340, "ratings" are adjusted. The ratings can be adjusted for members involved with a claim (e.g., the claimant, any members making contributions, and any members opting out of the claim). As but one example, the rating of a member disputing the claim might be reduced, especially if grounds for disputing the claim are questionable, The ratings will now be discussed.

Over time, the risk-sharing system 420 can observe the behavior of members with respect to risk-sharing agreements. Using these observations in combination with trust-related data generated by the social network system 410, the risk-sharing system 420 can improve the assessment of risk pool reliability.

Reference is now made to Figure 5. At block 510, the risk-sharing system 420 observes the risk-related behavior of members with respect to risk-sharing agreements. Risk-related behavior of a member can include, without limitation, the following: activity on the risk-sharing system 420 (high activity is a good indicator of good friendship, and low activity is a good indicator of an acquaintance), number of agreements entered into and number of members in each agreement, agreed-upon financial contribution to other members (totaled from all agreements), potential support received from other members (totaled from all agreements), amount and frequency of requests to provide financial support, amount and frequency of acceptances to provide financial support, amount and frequency of claims filed, amount and frequency of claims disputed, etc. In addition to making observations, the risk- sharing system 420 can request members to supply information via, for example, risk profiling testing.

At block 520, the risk-sharing system 420 uses the social network to access relevant trust-related data. Online social network systems typically provide trust-related data such as trust points or an equivalent to other members. The trust-related data serves as qualitative measure of trustworthiness. Trust related data includes, but is not limited to, trust points, endorsements/references, number of successfully invited friends to the social network, activity level in group discussions (number of posts, response time), and number of positive acknowledgements regarding certain activities in the social network.

At block 530, the risk-sharing system 420 computes a rating that is based on the observations. For example, the risk-sharing system 420 can create a numerical rating such as a ratio of positive behavior over negative behavior. This rating is then further adjusted according to the member's trust points. Thus, a member rating is based on both qualitative and quantitative data.

At block 540, the rating is used to reduce risk. A rating can be used proactively to measure the trustworthiness with respect to a claim (e.g., likelihood that a person will make an agreed-upon contribution). A rating can be used to decide whether to select trusted persons to form or join an agreement. The member ratings can also be used retroactively to evaluate members currently in agreements. In some instances, a member having a low rating (i.e., high risk) can be removed from an agreement or have his connection to other members disconnected. In other instances, a member having a low rating might be asked to lower his support amount (e.g., from $50 to $25).

Thus, the member ratings may be used to maximize low risk agreements and avoid risky agreements. A member can use a member rating as guidance (e.g., a suggestion) and act accordingly. In some embodiments, the risk- sharing system 420 can use member ratings as thresholds, and take actions automatically to reduce portfolio risk.

By using a combination of qualitative and quantitative data and creating a rating that reflects both the quantified risk and qualitative risk, the risk- sharing system 420 can synergistically improve the accuracy of risk assessment.

A method herein also offers advantages to insurance companies. It reduces the burden on claims processing, since smaller claims (depending on the type and deductible of the insurance contract) are not processed. This, in turn, can result in significant cost savings by insurance companies.

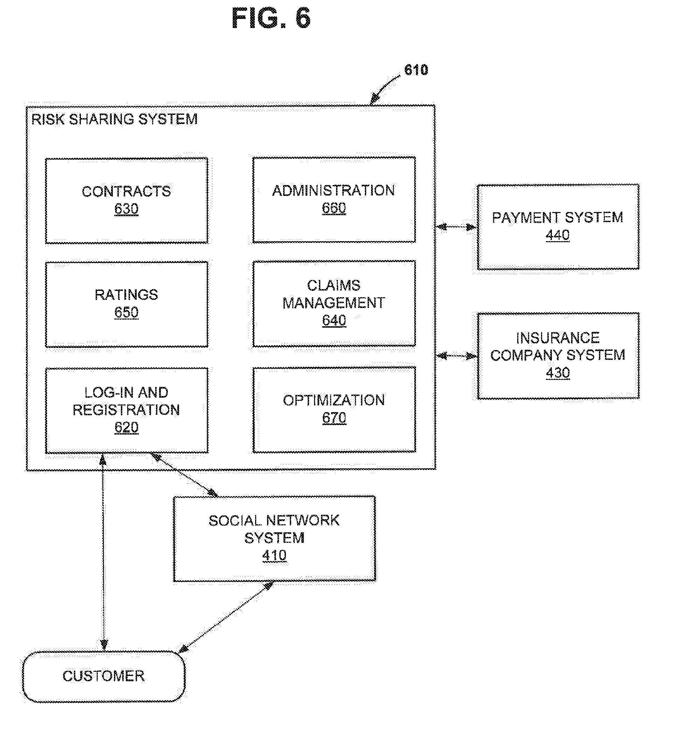

Figure 6 illustrates an example of a risk-sharing system 610. The risk-sharing system 610 of Figure 6 has a plurality of subsystems including, but not limited to, a contracts subsystem 630, a claims management subsystem 640, a ratings subsystem 650, an administration subsystem 660, and an optimization subsystem 670. The risk-sharing system 610 also includes a subsystem 620 for login and registration. These subsystems 620-670 may be run on a single computer or they may be distributed over multiple computers.

### Login and Registration Subsystem 620

A customer may log in directly to the risk-sharing system 620, or a customer may log in indirectly. As an example of an indirect log-in, a customer can use social logins (e.g. a Facebook account). Once connected, a customer can interact with the risk-sharing system 610.

### Contracts Subsystem 630

The contracts subsystem 630 enables a customer to enter into a risk-sharing agreement, and it can obtain conventional insurance. The contracts subsystem 630 accesses social network systems 410 to identify trusted persons, and forms the risk-sharing agreements.

To guide a customer, the contracts subsystem 630 can display the type of contract, terms and conditions, and a request for payment information. The customer enters the requested information, including payment information. The contract and payment data are sent off electronically for validation.

If the customer is not aware of the types of insurance that are available, risk profiling can be performed. The contracts subsystem 630 can run a profiling algorithm, which automatically recommends insurance coverage. For example, the customer is requested to answer simple questions about personal life, employment, and assets. The contracts subsystem 630 then generates specific suggestions of insurance coverage that can be regarded as customized insurance coverage advice. The suggestions might include a risk-sharing agreement alone, or a risk-sharing agreement in combination with conventional insurance.

If conventional insurance is desired, a query is sent to external contract databases of various insurance companies. The external databases reply with a datafeed to the customer's specific insurance requirements. The customer is presented with the name of the insurance policy, the price, and other information that allows the customer to compare the different contracts. The customer then makes a selection and makes a payment via a payment service provider 440.

The contracts subsystem 630 can also perform price comparisons and cost simulations. Cost savings can be investigated by adjusting various indemnifications, considering the savings by forming new risk-sharing agreements, considering the savings by joining existing risk-sharing agreements, etc. The price comparisons are displayed to the customers.

### Claims Management Subsystem 640

A customer can log onto the claims management subsystem 640 to file a claim. The claimant enters the details that are requested to complete the claim. The claimant is asked to estimate the amount of the claim and provide evidence (e.g., statements, photos and documents). This information is then disclosed to the members of the agreement so the members can evaluate the submitted information

If a member is requested to make a contribution, that member will be given the option to challenge the claim, opt out, pay a reduced amount of support, or pay the agreed-upon amount. The claimant will be informed of all members who opt out or reduce their support amount. The claimant can interview those people to determine their reasons for opting out or reducing the support amount.

If a claim does not exceed the coverage, and all members make their agreed-upon contributions, the claim is paid in full by the group. If the claim exceeds the coverage, the excess amount is paid by an insurance company or by the claimant.

The claimant specifies which information the insurance company receives. The claims management system 640 can submit the data directly to the insurance company via an API or other means. The insurance company evaluates the transferred data.

### Ratings Subsystem 650

The ratings subsystem 650 interacts with the social network systems 410 to access trust-related (qualitative) data (e.g., trust points) about members. For instance, it can access a social graph showing all the trusted persons connected to a member, and determine trust points from the social graph.

The ratings subsystem 650 also observes the risk-taking behavior of members, computes quantitative data corresponding to the behavior, and uses the qualitative data to adjust the quantitative data.

The ratings subsystem 650 provides the member ratings to other subsystems in the risk-sharing system 610. It can also provide the member ratings to payment providers and insurance companies.

### Administration Subsystem 660

The administration subsystem 660 facilitates connections with trusted persons. For example, if a person is no longer trusted, a connection to that person can be terminated. If a person is no longer registered with the risk-sharing system 420, the connection can be cancelled. The administration subsystem 660 can also allow a customer to recommend, find and invite trusted persons.

The administration subsystem 660 can also facilitate communications between members. For example, a member can request, confirm, remind and deny financial support; and increase and decrease the amount of financial support.

The administration subsystem 660 also allows a member to withdraw from a risk-sharing agreement. It may address the resulting change in risk to the remaining members of the agreement by either increasing the personal deductible of the remaining members or by notifying the insurance company to adjust the deductible and the insurance premium accordingly.

The administration subsystem 660 may also provide secure, central online storage of all insurance contracts. Services such as contract information upload, contract expiration reminders, automatic contract cancellation generation, contract terms and condition changes may be provided to customers. Thus, the administration subsystem 660 provides an effective and efficient way to monitor insurance contracts online.

### Optimization Subsystem 670

The portfolio optimization subsystem 670 can use the member ratings to reduce insurance premiums for the members involved in different risk- sharing agreements. The portfolio optimization subsystem 670 can perform a cost saving potential simulation for an existing agreement. For instance, the portfolio optimization subsystem 670 can use the member ratings to identify trusted persons to join the agreement, and work with insurances compute a new deductible based on those new persons joining.

Although a method and system herein may be used to reduce the cost of insurance coverage, it is not so limited. A method herein may be used to provide insurance against activities such as legal risks, operational risks, credit risks, market risks, liquidity risks, reputational risks, volatility risks, settlement risks and profit risks.

## Claims

1. A method comprising:
via at least one online social network system, identifying trusted persons who might be willing to join a risk-sharing agreement to cover an activity or asset;
via a computer system in communication with the online social network system, forming the risk-sharing agreement among at least some of those trusted persons; and
using the risk-sharing agreement to reduce the cost of conventional insurance.

2. The method of claim 1, wherein using the computer system to form the risk-sharing agreement includes inviting the trusted persons to enter into the risk-sharing agreement, including proposing terms of the agreement; and using the computer system to receive acceptances from those trusted persons willing to join the risk-sharing agreement.

3. The method of claim 1, wherein the risk-sharing agreement is used to cover the activity or asset instead of conventional insurance.

4. The method of claim 1, further comprising purchasing conventional insurance to cover the activity or asset, and using the risk-sharing agreement to increase a deductible of the conventional insurance.

5. The method of claim 1, further comprising processing a claim against the covered activity or asset, including using the social network system to discuss the claim.

6. The method of claim 1, wherein processing a claim includes allowing a member of the agreement to challenge the claim, opt out, or make a payment.

7. The method of claim 1, further comprising using qualitative and quantitative data about members of the risk-sharing agreement to compute member ratings.

8. The method of claim 7, wherein the quantitative data is based at least on observations of members with respect to the risk-sharing agreement.

9. The method of claim 1, further comprising using the social network to find services to help a claimant.

10. A system comprising:
processing means for identifying trusted persons, via at least one online social network system, who might be willing to join a risk-sharing agreement to cover an activity or asset;
processing means for inviting the trusted persons, via the at least one online social network system, to enter into the risk-sharing agreement, including proposing terms of the agreement;
processing means for receiving acceptances from those trusted persons willing to join the risk-sharing agreement, such that, via the risk-sharing agreement the cost of conventional insurance is reduced.

11. The system of claim 10, further comprising processing means for generating member ratings from a combination of qualitative and quantitative criteria, the qualitative criteria accessed from the social network system, the quantitative criteria based on risk-taking behavior with respect to the risk-sharing agreement, wherein the member ratings are used to reduce risk in the risk- sharing agreement.

12. A system comprising a computer system programmed to access at least one online social network system to identify trusted persons and form risk-sharing agreements among the trusted persons; use the risk-sharing agreements to lower up-front insurance costs of the trusted persons; and create ratings over time for the trusted persons, the ratings based on (a) risk-taking behavior of the trusted persons with respect to the risk-sharing agreements and (b) qualitative trust data about the trusted persons, the qualitative data provided by the at least one social network system.

13. The system of claim 12, wherein the computer system uses the ratings to reduce member risk and/or risk in the agreement.

14. The method of claim 7 further comprising, or the system of claim 12 further comprising processing means for, reducing risk in the agreement and/or in future agreements using the ratings by identifying risky trusted persons.

15. The system of claim 14, wherein the trusted persons include social network friends.
